# EUROPÄISCHE PATENTANMELDUNG

(11) **EP 2 644 263 A1**
(43) Veröffentlichungstag der Anmeldung: **02.10.2013**
(21) Anmeldenummer: 12161724.5
(22) Anmeldetag: 28.03.2012
(51) Int. Cl.: B01J 19/24, C01C 3/02, C07C 45/52

(54) **Druckgeregelter Reaktor**

(71) Anmelder: Aurotec GmbH, 4840 Vöcklabruck (AT)
(72) Erfinder: ZIKELI, Stefan, 4844 Regau (AT); ECKER, Friedrich, 4850 Timelkam (AT)
(74) Vertreter: Sonn & Partner Patentanwälte

(57) **Zusammenfassung**

Die vorliegende Erfindung betrifft ein Verfahren und eine Vorrichtung zur Pyrolyse oder Thermolyse eines fluiden oder fluidisierten Ausgangsstoffes bei Unterdruck in einem Rohrbündelreaktor bestehend aus einer Vielzahl an beheizbaren Reaktorrohren, wobei der Ausgangsstoff durch zumindest eine Zuleitung dem Rohrbündelreaktor an einem Ende zugeführt wird, wobei die Zuleitung über mehrere Druckreduktionseinheiten verfügt, welche einen Überdruck vor der Einleitung des Ausgangsstoffes in einzelne Reaktorrohre des Rohrbündelreaktors und einen diesbezüglichen Unterdruck im Inneren der Reaktorrohre ermöglicht, wobei die Druckreduktionseinheiten einen im Wesentlichen gleichen Einstrom des Ausgangsstoffes in einzelne Reaktorrohre steuern, und die Reaktorrohre in zumindest einem primären Abschnitt auf eine Zersetzungstemperatur des Ausgangsstoffes erhitzt werden, wodurch der Ausgangsstoff pyrolysiert oder thermolysiert wird und ein Pyrolyse- oder Thermolyse-Produkt erhalten wird.

## Beschreibung

Die vorliegende Erfindung betrifft Verfahren und Apparate für chemische Reaktionen in beheizten Reaktoren bei Unterdruck.

Die EP 363 066 B1 beschreibt einen induktiv beheizbaren Reaktor für Fluidphasen Reaktionsprozesse, insbesondere zur Hochtemperaturpyrolyse von Chlordifluormethan, welcher aus einem Materialblock mit einer Vielzahl von Reaktionsrohren besteht, wobei der Materialblock induktiv beheizt werden kann.

In der DE 27 12 728 A1 wird ein Rohrreaktor zum Erhitzen von Gasen oder Dämpfen beschrieben, in dem diese Gase oder Dämpfe durch eine Schüttung aus elektrisch leitenden Körpern geleitet werden, die durch elektromagnetische Induktion erhitzt werden.

Die DE 10 2007 034 715 A1 beschreibt ein Verfahren zur Herstellung von Cyanwasserstoff nach dem Andrussow-Verfahren, bei dem Methan und Ammoniak bei Überdruck zu Cyanwasserstoff und Wasser umgesetzt werden. Der Reaktor hierzu enthält eine Gaszuleitung, eine Mischschicht, welche einen Druckabfall hervorrufen kann, eine Katalysatorschicht und ggf. einen nachgeschalteten Wärmetauscher zur Abführung der Wärme.

Die US 2011/306788 beschreibt ein Verfahren zur Oxidierung organischer Moleküle durch Erhitzung eines Gases mit dem Ausgangsstoff in einem Katalysator-gefüllten Rohrreaktor. Diverse Ausgangstoffe können in diesem Reaktor oxidiert werden, z.B. Propylen, Isobutylen, tert-Butanol, Methyl-tert-butylether, Acrolein und Methacrolein.

Die Publikation US 7,951,978 B2 betrifft Verfahren zur Produktion von Acrolein aus Glycerin-Gas bei Drücken von 0,01 bis 30 kPa durch Kontaktierung mit einem festen Katalysator bei Temperaturen von 200°C bis 550°C.

In der DE 2325749 A1 wird das BASF-Verfahren zu Gewinnung von Blausäure durch Thermolyse von Formamid bei Unterdruck beschrieben.

Die WO 2009/062681 beschreibt die Herstellung von Blausäure durch katalytische Dehydratisierung (Thermolyse) von gasförmigem Formamid. Der Reaktor zur Dehydratisierung hat lagenförmig aufgebaute Schichten mit mehreren verkreuzt angeordneten Reaktionskanälen, wobei der Reaktor eine innere Oberfläche aufweist, die einen Eisenanteil von über 50 Gew.-% enthält. Der Reaktionskanal hat einen mittleren hydraulischen Durchmesser von 1 bis 6 mm, wobei keine zusätzlichen Katalysatoren und/oder Einbauten vorgesehen sind. Der Nachteil dieser Ausführung liegt daran, dass jeder Kanal in unterschiedlicher Menge mit Formamid beschickt wird, wodurch es aufgrund der Konzentrationsunterschiede zu unterschiedlichen Produkt- und Nebenproduktbildungen kommt.

In der Publikation WO 2009/062897 wird ein Verfahren zur Herstellung von Blausäure durch Verdampfen von Formamid in einem Verdampfer und katalytische Dehydratisierung des gasförmigen Formamids beschrieben. Der Verdampfer wurde hierbei auf eine Leistung von 10 bis 2000 MW/m³ optimiert.

Die DE 69215358 T2 beschreibt einen elektrisch beheizbaren Thermolysereaktor zur Zersetzung von Abgasen bei Unterdruck.

Eine Reihe an kontinuierlich betriebenen chemischen Reaktoren für Über- oder Unterdruck-Reaktionen sind somit bekannt. Übliche Druckregelungen bisheriger Reaktoren zum kontinuierlichen Betrieb ist jedoch gemein, dass insbesondere bei der Verwendung von Mehrfach-Reaktoren eine ungleiche Einleitung der Ausgangstoffe in den Reaktor die Folge sein kann. Dadurch können insbesondere bei kurzen Verweilzeiten von Durchflussreaktoren Unterschiede in der Umsetzung und der Art der Ablaufenden chemischen Reaktionen zu Nebenprodukten auftreten. Dies wirkt sich negativ auf die Produktqualität und Quantität aus da Optimierungen der Mengen-, Durchflussgeschwindigkeits-, Druck- und Temperatur-Parameter schwierig werden.

Es ist eine Aufgabe der vorliegenden Erfindung verbesserte Verfahren zur Pyro- oder Thermolyse in Reaktoren zur Verfügung zu stellen, welches homogenere Produkte liefert.

Die vorliegende Erfindung betrifft ein Verfahren zur Pyrolyse oder Thermolyse eines fluiden oder fluidisierten Ausgangsstoffes bei Unterdruck in einem Rohrbündelreaktor bestehend aus einer Vielzahl an beheizbaren Reaktorrohren, wobei der Ausgangsstoff durch zumindest eine Zuleitung dem Rohrbündelreaktor an einem Ende zugeführt wird, wobei die Zuleitung über mehrere Druckreduktionseinheiten verfügt. Die Druckreduktionseinheiten ermöglichen bzw. bewirken einen Überdruck vor der Einleitung des Ausgangsstoffes in einzelne Reaktorrohre des Rohrbündelreaktors und einen diesbezüglichen Unterdruck im Inneren der Reaktorrohre. Erfindungsgemäß steuern die Druckreduktionseinheiten einen im Wesentlichen gleichen Einstrom des Ausgangsstoffes in einzelne Reaktorrohre. Das bedeutet z.B., dass alle Rohre gleichmäßig beschickt werden und den gleichen Durchsatz an Ausgangsstoff aufweisen. Dadurch wird während der Pyro- oder Thermolyse in allen Rohren gleichmäßig der Ausgangsstoff zersetzt ohne, dass in manchen Rohren ein überdurchschnittlich hoher Durchsatz stattfindet bzw. hohe Ausgangsstoffkonzentrationen auftreten, welche zu verstärkten Nebenproduktbildungen führen (z.B. Kondensation-oder Polymerisationsprodukte). Erfindungsgemäß werden die Reaktorrohre in zumindest einem ersten Abschnitt auf eine Zersetzungstemperatur des Ausgangsstoffes erhitzt, wodurch der Ausgangsstoff pyrolysiert oder thermolysiert wird und ein Pyrolyse-oder Thermolyse-Produkt erhalten wird.

In einem weiteren Aspekt betrifft die Erfindung eine Vorrichtung geeignet zur Durchführung dieses Verfahrens mit einem Pyrolyse- oder Thermolysereaktor mit einem Reaktorbündel einer Vielzahl an Reaktorrohren, mit einer Ausgangsstoffzuleitung, welche mit den einzelnen Reaktorrohren über eine Druckreduktionseinheit verbunden ist, wobei die Reaktorrohre beheizbar sind, und wobei das Innere der Reaktionsrohre mit einer Unterdruckpumpe operativ verbunden ist, wobei die Druckreduktionseinheiten einen im Wesentlichen gleichen Einstrom des Ausgangsstoffes in einzelne Reaktorrohre steuern. Dieser Reaktor wird vorzugsweise im erfindungsgemäßen Verfahren verwendet. Die folgende nähere Beschreibung bezieht sich sowohl auf das Verfahren, in dem die Vorrichtung zum Einsatz kommen kann, als auch auf die Vorrichtung, welche für die beschriebenen Verfahren und Verfahrensparameter geeignet oder hergerichtet ist.

Die Pyro- oder Thermolyse kann katalytisch, z.B. an eisenhaltigen Oberflächen, z.B. Eisen oder einer Eisenlegierung, oder Eisenoxid, erfolgen. Die Pyro- oder Thermolyse kann eine Dehydratisierung sein. Beispielsweise ist eine Dehydratisierung von Glycerin als Ausgangsstoff möglich. Die Dehydratisierung von Glycerin kann zur Gewinnung von Acrolein verwendet werden. In einem Beispiel ist der Ausgangsstoff ein Carbonsäureamid, wie Formamid, welche zu Blausäure (HCN) thermolysiert werden kann. Im Speziellen betrifft die Erfindung daher auch ein Verfahren zur Thermolyse eines Carbonsäureamids, z.B. von Formamid, zur Bildung von HCN in einem Rohrbündelreaktor mit einer Vielzahl an Reaktorrohren, wobei in einer ersten Reihe an Verfahrensschritten Formamid mit beheizten Oberflächen des Reaktors in Kontakt gebracht wird, wobei die Vielzahl an Reaktorrohren des Rohrbündelreaktors mit gleichen Mengen Carbonsäureamids durch Druckregulation beschickt werden, wobei an den beheizten Oberflächen Formamid auf seine Zersetzungstemperatur erhitzt wird und kontinuierlich HCN-Gas abgeführt wird.

Die vorliegende Erfindung wird weiter wie in den Ansprüchen angegeben definiert.

Erfindungsgemäß wird zur Pyro- oder Thermolyse des Ausgangsstoffes (z.B. Carbonsäureamid) ein Rohrbündelreaktor eingesetzt. Ein Rohrbündelreaktor besteht aus einer Vielzahl an Reaktorrohren, welche in Summe eine große Oberfläche aufweisen und dennoch einen hohen Durchsatz des Ausgangsstoffes erlauben. Ein Rohrbündelreaktor kann beispielsweise aus 2, 3, 4, 5, 6, 7, 8, 9, 10, 11, 12, 13, 14, 15, 16 oder mehr Einzelrohren bzw. Reaktorrohren bestehen. Vorzugsweise besteht der Rohrbündelreaktor aus 10 bis 200, insbesondere bevorzugt 15 bis 150, im Speziellen bevorzugt 20 bis 100, im Besonderen bevorzugt 30 bis 80 Einzelrohren bzw. Reaktorrohren. Die Reaktorrohre können getrennte Rohre sein oder längs miteinander verbunden, z.B. in einem gemeinsamen Materialblock aufgenommen sein. Vorzugsweise sind die Rohre beabstandet, z.B. mit 1 mm bis 5 mm Abstand zueinander.

Erfindungsgemäß werden die Reaktorrohre separat voneinander über Druckreduktionseinheiten bespeist. Dadurch kann für jedes Rohr der eigene Durchfluss des Ausgangsstoffes bestimmt werden, welcher gegenüber den anderen Reaktorohren angepasst, d.h. im Wesentlichen gleich, gewählt wird. "Im Wesentlichen" soll so verstanden werden, dass geringfügige Abweichungen im Bereich von unter 5% des Durchflusses, insbesondere unter 3%, im Speziellen unter 2%, oder unter 1% am meisten bevorzugt unter 0,5% möglich sein können. Je nach Ausgangsstoff der zu unterschiedlichen Nebenprodukten und festen Ablagerungen führen kann sollte der maximale Unterschied im Durchfluss der einzelnen Reaktorrohre niedrig gehalten werden. Rohre im Zentrum eines z.B. im Querschnitt kreisförmigen Bündels neigen ohne individuelle Druckwiderstand- bzw. Durchflusskontrolle zu verstärktem Durchfluss und Rohre am Rand des Bündels zu schwächerem Durchfluss (zumindest im Fall einer zentral positionierten gemeinsamen Einspeisung durch eine Zu- oder Einleitung). Erfindungsgemäß kann dieser Nachteil vermieden werden, womit eine gleichmäßige Verteilung des Ausgangsstoffes auf alle Rohre des Reaktors ermöglicht wird. Neben den Reaktorrohren, welche für die Pyro- oder Thermolyse vorgesehen sind, kann der Reaktor auch zusätzliche Rohre aufweisen, die nicht dieser Durchflusskontrolle unterliegen.

Der gleichmäßige Durchfluss kann durch unterschiedlich gewählte Druckreduktionseinheiten ermöglicht werden. Solche Druckreduktionseinheiten sind beispielsweise Druckregler oder Kapillaren mit einem vorbestimmten Druckwiderstand. Durch unterschiedliche Kapillarendurchmesser und/oder -längen weisen diese einen unterschiedlichen Druckwiderstand auf. Dadurch können Durchflüsse aller Rohre angeglichen werden. Z.B. im Fall von konzentrisch angeordneten Rohren werden für Rohre im Zentrum des Bündels die Druckreduktionseinheit mit einem höheren Druckwiderstand gewählt, als, im Vergleich zu Rohren am Rand des Bündels, Rohre, welche bei gemeinsamer Einspeisung normalerweise einen geringeren Durchfluss hätten. Daher werden Rohre mit üblicherweise hohem Durchfluss durch einen höheren Druckwiderstand (z.B. eine längere oder schmalere Kapillare) verringert beschickt als ohne individuelle Druckreduktion und Rohre mit ansonsten geringem Durchfluss werden verstärkt beschickt aufgrund eines im Vergleich zu den Rohren im Zentrum geringeren Druckwiderstandes (z.B. durch kürzere oder breitere Kapillaren). So ist es in einem Beispiel möglich eine Zuleitung zu verwenden, welche in einen Verteilerbereich mündet, von dem die einzelnen Druckreduktionseinheiten zu den einzelnen Reaktorrohren führen. Alternativ ist es auch möglich für jedes Rohr eine einzelne Zuleitung (mit an sich gleichen Durchflüssen) zu wählen, mit gleichen Druckreduktionseinheiten für alle Rohre, um den gleichen Durchfluss zu gewährleisten. Eine Möglichkeit ist beispielsweise eine Verteilerkappe mit gleich dimensionierten Zuleitungsschläuchen für jedes Reaktorrohr.

Zusätzlich zur Gleichsteuerung des Durchflusses, können die Druckreduktionseinheiten verwendet werden um eine genaue Steuerung des Durchflusses zu ermöglichen. Zu diesem Zweck wird der Druckwiderstand der Druckreduktionseinheiten so gewählt, dass bei Nichtbetrieb kein Durchfluss ermöglicht wird. D.h. der Druckwiderstand ist gleich oder größer dem Druckunterschied der Zuleitung zum Innenraum der Reaktorrohre. Üblicherweise wird der Ausgangsstoff über eine Pumpe, welche einen vorbestimmten Überdruck erzeugt, durch die Zuleitung zugeführt, der Unterdruck im Innenraum entsteht üblicherweise durch eine Unterdruck- bzw. Vakuumpumpe, welche dem Reaktor nachgeschaltet ist. Auch dieser Unterdruck kann frei gewählt werden. "Unterdruck" soll hierin relativ verstanden werden. Der Unterdruck im Innenraum der Reaktionsrohre ist relativ zum Druck der Zuleitung. Der Unterdruck kann, muss aber nicht, ein absoluter Unterdruck, i.e. ein Unterdruck relativ zum Atmosphärendruck, sein. Es ist beispielsweise auch möglich absolute Überdrücke im Innenraum zu halten, entweder durch den Zufluss von Medium durch die Zuleitung oder alternativ oder in Kombination durch eine separate Zufuhr eines Mediums, vorzugsweise eines inerten Mediums oder Luft, in den Innenraum der Reaktionsrohre. Bei der Thermolyse von Formamid wird beispielsweise ein absoluter Unterdruck unter 1000 hPa gewählt. Der Druckwiderstand der Druckreduktionseinheiten ist in vorzugsweisen Ausführungsformen mindestens 800 hPa, vorzugsweise mindestens 900 hPa, oder mindestens 1000 hPa, mindestens 1100 hPa, mindestens 1200 hPa, mindestens 1300 hPa, mindestens 1400 hPa, mindestens 1500 hPa, mindestens 1600 hPa, mindestens 1800 hPa, mindestens 2000 hPa. Vorzugsweise unterbindet der Druckwiderstand bei Atmosphärendruck im Inneren der Reaktorrohre den Einfluss von Ausgangsmaterial.

In bevorzugten Ausführungsformen wird der Unterdruck im Inneren der Reaktorrohre derart gewählt, sodass der Einstrom von Fluid in den Reaktor zwischen 1x10⁻⁵ m³/h und 1 m³/h, vorzugsweise zwischen 1x10⁻⁴ m³/h und 1x10⁻¹ m³/h beträgt, und/oder zwischen 0 und 1x10⁻⁶ m³/h, vorzugsweise zwischen 0 und 1x10⁻⁸ m³/h, bei Nichtbetrieb beträgt. In bevorzugten Ausführungsformen wird der Unterdruck im Inneren der Reaktorrohre derart gewählt, sodass der Einstrom von Fluid in den Reaktor zwischen 1x10⁻² kg/h und 1000 kg/h, vorzugsweise zwischen 0.1 kg/h und 100 kg/h beträgt, und/oder zwischen 0 und 1x10⁻³ kg/h, vorzugsweise zwischen 0 und 1x10⁻⁵ kg/h, bei Nichtbetrieb beträgt. Bei Nichtbetrieb ist üblicherweise der Druck im Inneren der Reaktionsrohre Atmosphärendruck, von ca. 1000 hPa.

Die Unterdruck-Thermolyse oder -Pyrolyse wird vorzugsweise bei Drücken unter dem Atmosphärendruck betrieben. In besonderen Ausführungsformen wird die Pyrolyse oder Thermolyse des Ausgangsstoffes bei absolutem Unterdruck, vorzugsweise bei einem absoluten Druck von bis zu 500 hPa, insbesondere bevorzugt von bis zu 250 hPa, im Speziellen bevorzugt im Bereich von 80 hPa bis 200 hPa, ausgeführt.

Ein wesentlicher Vorteil der vorliegenden Erfindung liegt in der kontrollierten Druckeinspeisung. In einem Unterdruckreaktor besteht die Gefahr, dass ohne genaue Kontrolle des Einspeisedrucks, der Unterdruck in die Zuleitung durchschlägt oder dieser Durchschlag nur in einigen wenigen Rohren zum Vorschein kommt - d.h. nur die mittigen Rohre würden ausreichend beschickt werden. Dies wird durch die erfindungsgemäße Druck- und Einflusskontrolle behoben, und zwar durch den individuellen Druckwiderstand/- verlust der Rohre und dem damit verbundenen gleichartigen Druckaufbau vor der Einleitung in die Reaktorrohre bzw. des gehaltenen Innendrucks in den Reaktorrohren.

Zur Pyro- oder Thermolyse wird der Reaktor beheizt. Hierzu wird vorzugsweise die innere Oberfläche der Reaktionsrohre auf die Zersetzungstemperatur des Ausgangsstoffes erhitzt. Die effektive Oberfläche kann vorzugsweise durch entsprechende Einbauten in den Reaktionsrohren, wie beispielsweise Schüttungen oder die Einlagerung von bestimmten Körpern, erhöht werden. Vorzugsweise eingelagerte Körper haben beispielsweise eine zusätzliche Mischfunktion, z.B. wie ein statischer Mischer. Vorzugsweise werden Siebe, Sinterelemente, oder sternförmige Körper verwendet, welche insbesondere auch versetzt in die Rohre eingelagert werden können, sodass ein Sternspornbereich über einem Lückenbereich liegt. Ein solches Einbauelement, insbesondere ein Sinterelement wird vorzugsweise im Verdampfer in Nähe der Zuführung bzw. der Druckreduktionseinheit platziert, um eine optimale Verteilung im Verdampfer und komplette Verdampfung zu gewährleisten.

Die Reaktionsrohre müssen nicht auf der gesamten Länge auf die Zersetzungstemperatur erwärmt werden. Die Erwärmung in einem (primären) Abschnitt ist ausreichend.

Andere Abschnitte können zur Vorerwärmung oder Verdampfung vorgesehen werden, in denen beispielsweise der Ausgangsstoff zumindest auf Siedetemperatur aber unter die Zersetzungstemperatur erwärmt wird. Vorzugsweise wird im erfindungsgemäßen Verfahren der Ausgangsstoff bei einer Temperatur unter der Zersetzungstemperatur vorerwärmt und verdampft. Die erfindungsgemäße Vorrichtung kann einen Verdampfer aufweisen. Vorzugsweise ist der Verdampfer dem Zersetzungsabschnitt unmittelbar vorgelagert, d.h. die oben beschriebenen Druckreduktionseinheiten führen zunächst in den Verdampfer (bzw. Verdampfungsabschnitt) und nachher in den Thermolysator (bzw. Thermolyseabschnitt oder Zersetzungsabschnitt). Der Ausgangsstoff wird also in einem sekundären (Vorerwärmer-) Abschnitt der Reaktorrohre verdampft, und vorzugsweise vom sekundären Abschnitt in den primären (Thermolyse-) Abschnitt zugeführt. Vorzugsweise wird der Ausgangsstoff über eine Einspritzdüse in den Verdampfer eingetragen um eine Zerstäubung und gute Verteilung zu fördern. Der Ausgangsstoff kann in einem Lösungsmittel gelöst sein, welches ggf. ebenfalls im Verdampferabschnitt verdampft wird.

Die Thermolyse ist eine chemische Reaktion, bei der ein Ausgangsstoff durch kontrolliertes Erhitzen in ein, zwei oder mehrere Produkte zersetzt wird. Während die Thermolyse somit mit der Darstellung bestimmter Produkte (oder reaktiver Zwischenstufen) befasst ist, betrifft die Pyrolyse die thermischen Zersetzung mit dem Ziel diese Substanzen abzubauen. Der erfindungsgemäße Reaktor ist für beide Reaktionen geeignet und wird einheitlich für beide Prozesse als "Thermolysator" bezeichnet, ohne auf die Thermolyse eingeschränkt zu sein. Ebenso kann die Thermolyse ein Zwischenschritt in den Reaktionen des Reaktors sein. Weitere (Folge-)Reaktionen sind möglich. Insbesondere betrifft der Begriff der Thermolyse wie hierin verwendet auch die chemische Umsetzung des Ausgangsstoffes unter Hitzeeinwirkung ohne dass eine Spaltung vorgenommen wird. Solche möglichen Reaktionen sind beispielsweise chemische Umlagerungen wie die Beckmann-Umlagergung, welche z.B. zur Bildung von epsilon-Caprolactam benutzt werden kann. Weitere mögliche Reaktionen für den erfindungsgemäßen Reaktor sind katalytische Umwandlungen, insbesondre Säurekatalysierte Umwandlungen oder Oberflächenreaktionen, Isomerisierungen, Hydrolysen, etc., chemische Reaktionen, welche unter Hitzeeinwirkung bei Hitzezufuhr von außen ablaufen.

Vorzugsweise begrenzt die innere beheizte Oberfläche den im Wesentlichen gesamten Innenraum eines Pyrolyse- oder Thermolysereaktors (alle beheizten Reaktorrohre). "Im Wesentlichen" wird hier verwendet, da klarerweise manche Bereiche frei bleiben müssen, wie beispielsweise Zuführ- oder Abführöffnungen für die Ein- bez. Ausführöffnung des Ausgangs- oder Zersetzungsprodukts. Vorzugsweise sind mindestens 70% der Oberflache des Innenraumes beheizt, insbesondere bevorzugt mindestens 75%, mindestens 80%, mindestens 85%, mindestens 90%, oder mindestens 95%.

Die innere Oberfläche der Reaktorrohre wird vorzugsweise auf Verdampfungstemperatur erwärmt. Im sekundären Abschnitt wird auf eine Temperatur unter der Zersetzungstemperatur beheizt, vorzugsweise mindestens 20°C, insbesondere bevorzugt mindestens 50°C, unter der Zersetzungstemperatur und/oder auf eine Temperatur bei der keine festen Nebenprodukte der Verdampfung des Ausgangsstoffes entstehen, insbesondere keine Polymerisationsprodukte entstehen.

Vom beheizbaren Verdampfer, führt vorzugsweise zumindest eine Gasleitung (oder mehrere, z.B. für jedes Reaktorrohr) in den Reaktor. Der Verdampfer kann auch ein Abschnitt im Rohrbündelreaktor sein.

Das erfindungsgemäße Verfahren bzw. die Vorrichtung ist für einen kontinuierlichen Betrieb ausgelegt. Vorzugsweise werden die Zersetzung im primären Abschnitt, vorzugsweise auch die Vorerwärmung und Verdampfung, und die Überführung des Ausgangsstoffes zum primären Abschnitt, kontinuierlich betrieben. Der Verdampfer kann zur Fluidisierung des Ausgangsstoffes dienen und/oder überführt diesen in den gasförmigen Zustand.

Die Beheizung des erfindungsgemäßen Reaktors und der Reaktorrohre erfolgt vorzugsweise indirekt, insbesondere induktiv. Eine alternative direkte Beheizung ist vorzugsweise von außerhalb des Innenraums der Reaktionsrohre. Selbstverständlich können auch Kombinationen einer indirekten und direkten Beheizung vorgesehen werden. Im Speziellen wird die innere Oberfläche der Reaktorrohre im primären Abschnitt induktiv beheizt. Ebenfalls kann die innere Oberfläche der Reaktorrohre im sekundären Abschnitt induktiv beheizt werden. Zur induktiven Beheizung sind die Reaktorrohre zumindest teilweise aus einem elektrischen Leiter zur Erhitzung durch Induktion. Insbesondere die Teile um die beheizten Oberflächen sollten beheizt sein. Sowohl die Innenflächen der Rohre und/oder die Einlagerungen können induktiv beheizt werden. Dadurch entsteht die für die Pyro- oder Thermolyse notwendige Wärme sofort am nötigen Ort. Die induktive Erhitzung hat den Vorteil, dass direkt am Ort der Pyrolyse - an dem auch Ablagerungen entstehen, diese leicht durch Temperaturerhöhung abgebrannt oder abgetragen werden können, mit oder ohne Sauerstoffzufuhr.

Zur Induktion können Leiterbahnen um den Reaktor, das Rohrbündel und/oder um die Einzelrohre gelegt werden. Diverse Formen sind hierfür bekannt und beispielsweise in Zinn und Semiatin (Heat Treating June 1988: 32-36) oder Zinn und Semiatin (Heat Treating August 1988: 29-32) beschrieben, welche hierin durch Bezugnahme aufgenommen sind. Die Leiterbahnen erzeugen ein Magnetfeld, welches durch Umpolung und Magnetisierungsverluste, bzw. Wirbelstromverluste im Reaktorrohr Wärme erzeugt. Der Strom kann durch einen operativ verbundenen Hochfrequenzgenerator erzeugt werden. Ein üblicher Frequenzbereich ist ca. 5 kHz bis 2,5 MHz, vorzugsweise 250 kHz bis 1 MHz. Die Leistung kann im Bereich von 2 kW bis 600 kW, vorzugsweise 30 kW bis 200 kW, liegen, oder höher, je nach Reaktorgröße. Vorzugsweise werden die Leiterbahnen zur Induktion gekühlt, z.B. wassergekühlt. Zur effektiven Induktion ist die Oberfläche der Reaktorrohre auch aus einem magnetischen oder magnetisierbaren Material mit möglichst hoher Curie-Temperatur, sodass eine effektive Erhitzung bis zur Zersetzungstemperatur oder höher ermöglicht wird. Die Curie-Temperatur von Reinmetallen ist beispielsweise: Kobalt: 1121°C, Eisen 766°C, Nickel 360°C. Mittels Induktion ist allerdings auch aufgrund der Leitereigenschaften (Wirbelstromverluste) alleine eine höhere Erhitzung möglich. Vorzugsweise ist die Oberfläche oder die Reaktionsrohre aus Eisen oder einer Eisenlegierung, vorzugsweise Stahl.

Die Erfindung betrifft auch ein Verfahren zur Pyrolyse oder Thermolyse eines fluiden oder fluidisierten Ausgangsstoffes, dadurch gekennzeichnet, dass der Ausgangsstoff an einer sekundären beheizten Oberfläche vorerwärmt und verdampft wird, der verdampfte Ausgangsstoff an eine primäre beheizte Oberfläche überführt wird, wobei diese primäre beheizte Oberfläche eine induktiv beheizte Oberfläche ist, und an der primären beheizten Oberfläche auf eine Zersetzungstemperatur des Ausgangsstoffes erhitzt wird, wodurch der Ausgangsstoff pyrolysiert oder thermolysiert wird und ein Pyrolyse- oder Thermolyse-Produkt erhalten wird. Der Reaktor ist vorzugsweise ein Rohrbündelreaktor.

Bei der Pyrolyse oder Thermolyse diverser Ausgangsstoffe, z.B. Formamid, kann es zur Bildung von festen Ablagerungen durch Nebenreaktionen kommen. Vorzugsweise werden feste Ablagerungen, welche durch die Pyrolyse oder Thermolyse gegebenenfalls als Nebenprodukte entstehen, durch erhöhte Temperatur der inneren Oberfläche des primären Abschnitts, insbesondere zur Verdampfung, Zersetzung oder zum Abbrennen der Ablagerungen, entfernt. Zur Entfernung wird der Zufluss des Ausgangsstoffes gestoppt und der Reaktor auf eine erhöhte Temperatur zum Entfernen der Ablagerungen erhitzt. Die Temperatur kann hierzu beispielsweise auf mindestens 1200°C, oder mindestens 1400°C im primären Abschnitt erhöht werden.

Für manche Pyro- oder Thermolysen ist die Anwesenheit eines Katalysators vorteilhaft. Daher kann die Oberfläche (der Rohrinnenwand und/oder der Einlagerungskörper) im primären Abschnitt mit einem Katalysator beschichtet sein. Für die Thermolyse von Formamid ist beispielsweise ein Eisenkatalysator zweckmäßig. Die Oberfläche kann beispielsweise Eisen oder Eisenoxid aufweisen. Vorzugsweise ist die innere Oberfläche der Reaktorrohre zumindest im primären Abschnitt, die Oberfläche eines Eisenkörpers.

Die Vorrichtung bzw. der Reaktorinnenraum sollte zumindest auf 500°C, bevorzugt auf mindestens 750°C oder mindestens 1000°C, insbesondere bevorzugt mindestens 1300°C, beheizbar sein, insbesondere bevorzugt wobei die Reaktorrohre Eisenkörper und oder eine eisenhaltige Oberfläche aufweisen. Ein Heizelement, wie bspw. eine Induktionsspule oder ein elektrisches Heizelement, kann hierfür angebracht sein.

Im Speziellen ist der Ausgangsstoff ein Carbonsäureamid, z.B. Formamid, oder Glycerin. Daher wird auch ein spezielles Verfahren, auch im Rahmen der oben beschriebenen Ausgestaltungen, zur Thermolyse von eines Carbonsäureamids, vorzugsweise Formamid, zur Bildung von HCN beschrieben oder zur Dehydration von Glycerin zur Bildung von Acrolein beschrieben. Die Thermolyse oder Dehydration erfolgt in einem Rohrbündelreaktor mit einer Vielzahl an Reaktorrohren; in einer ersten Reihe an Verfahrensschritten wird der Ausgangsstoff, insbesondere Formamid oder Glycerin, mit einer beheizten Oberfläche des Reaktors in Kontakt gebracht, wobei die Vielzahl an Reaktorrohren des Rohrbündelreaktors mit gleichen Mengen Ausgangsstoff durch Druckregulation beschickt werden, wobei an den beheizten Oberflächen der Ausgangsstoff auf seine Zersetzungstemperatur erhitzt wird und kontinuierlich Produkt, z.B. HCN-Gas oder Acrolein, abgeführt wird.

Vorzugsweise wird in dem Reaktor vor dem primären Abschnitt Sauerstoff, z.B. in Form von Luft, eingeleitet, welches die Produktion von Nebenprodukten reduziert. Diese Einleitung ist vorzugsweise nach dem sekundären Abschnitt (Verdampfer).

In einer zweiten Reihe an Verfahrensschritten, ohne Ausgangsstoff-Einleitung in den Reaktor, kann die Temperatur über die Zersetzungstemperatur erhöht werden um gegebenenfalls gebildete feste Ablagerung von Nebenprodukten der Produkt-Bildung durch Verdampfung, Zersetzung oder Abbrennen zu entfernen.

Vorzugsweise wird die Oberfläche zur Thermolyse von Formamid auf 430°C bis 600°C oder von Glycerin auf 300°C bis 500°C, vorzugsweise induktiv, erhitzt.

Vorzugsweise wird die Oberfläche zur Entfernung der Nebenprodukte auf 700°C bis 1500°C, vorzugsweise induktiv, erhitzt.

Nach der Thermo- oder Pyrolyse wird eine Trennung des Produktes vom Gasstrom vorgenommen. Das Produkt kann weiter gereinigt und aufgearbeitet werden. Vorzugsweise wird das Produkt über einen Wärmetauscher zur Wärmerückgewinnung geleitet. Die gewonnene Wärme kann zur Vorheizung des Ausgangsstoffes oder in einem nachgeschalteten Aufarbeitungsschritt genutzt werden.

Die vorliegende Erfindung wird durch die nachstehenden Figuren und Beispiele näher erläutert, ohne auf diese Ausführungsformen der Erfindung limitiert zu sein.

Figuren:

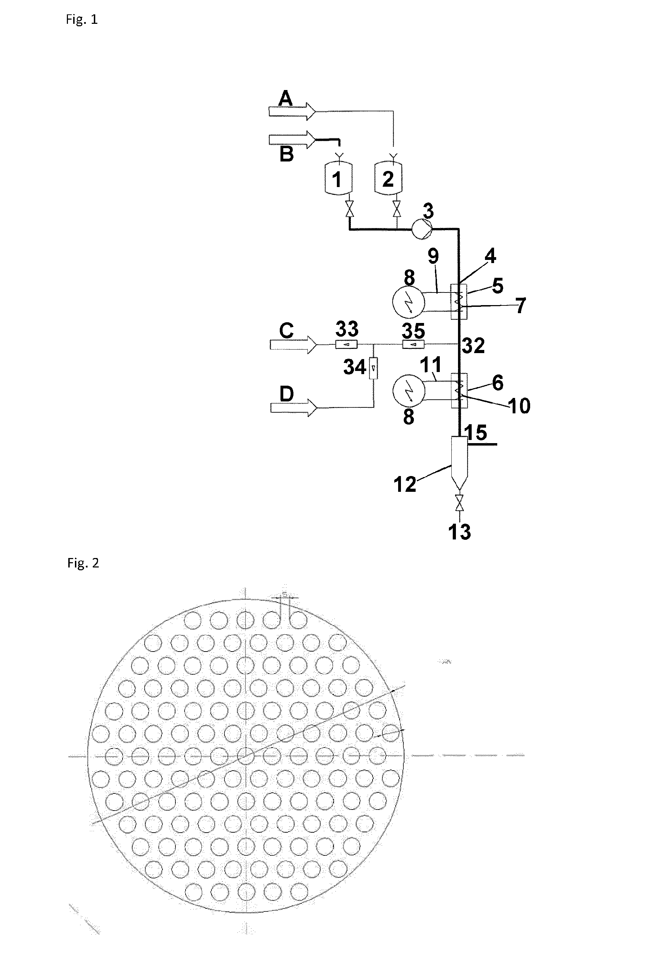

Figur 1 zeigt einen schematischen Aufbau einer Vorrichtung zur Thermolyse eines Ausgangsstoffes. Die zu verdampfenden Stoffe A (z.B. Ausgangsstoff) und B (z.B. ein zweiter Ausgangsstoff oder ein Trägermedium wie Wasser) werden in die entsprechenden Vorlagebehälter (1 und 2) vorgelegt. Die Stoffe A und B können über eine danach angebrachte Fördereinrichtung gleichzeitig oder nacheinander oder in Mischung der Fördereinrichtung (3) zugeführt werden. Über eine Druckreduktionseinheit (4) werden die Ausgangsstoffe in einen Verdampfer (5) zur Verdampfung der Ausgangsstoffe eingeleitet. Der Verdampfer (5) ist über eine Induktionsspule (7) beheizt, welche über eine elektrische Stromleitung (9) mit einem Wechselspannungsgenerator (8) verbunden ist. Die gasförmigen (verdampften) Stoffe werden in den Thermolysator (6) weitergeleitet, welcher über eine Spule (10) induktiv beheizt wird. Hierfür wird die Wechselspannung über Stromleitung (11) von einem Generator (8) bezogen. Zwischen Verdampfer (5) und Thermolysator (6) können weitere Stoffe, insbesondere Gase (C, z.B. Luft, und D, z.B. Inertgas, N₂) über Ventile (33, 34 und 35) an Position 32 eingeleitet werden. Pyrolyseprodukte werden über eine Spaltgasableitung (14) und einen Kondensatabscheider (12) abgeleitet. Kondensat kann über ein Ventil (13) abgelassen werden.
Figur 2 zeigt einen Querschnitt durch einen Reaktor mit einem Rohrbündel aus 120 Einzelrohren (Rohrreaktoren).

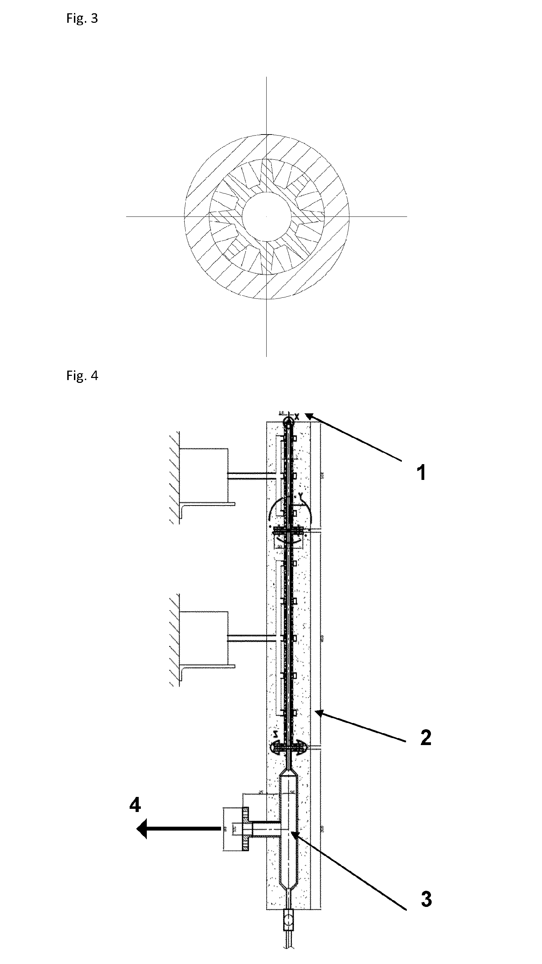

Figur 3 zeigt einen Querschnitt durch ein Rohr mit zwei übereinandergestapelten, versetzten sternförmigen Einlagerungen.
Figur 4 zeigt einen schematischen Aufbau eines Thermolysereaktors in einem isolierten Gehäuse. Die Ausgangsstoff-Zuleitung führt zu Punkt 1, an dem der Ausgangsstoff in den Verdampfer-Abschnitt eingeleitet wird. Der Verdampfer ist mit einem HF-Generator zur Erzeugung des Induktionsfeldes zur induktiven Erwärmung verbunden. Über einen Flansch wird der Verdampfer-Abschnitt mit dem Thermolysator-Abschnitt (2) verbunden, welcher über einen eigenen operativ verbundenen Hochfrequenz-(HF)-Generator verfügt, zur Erzeugung der induktiven Erwärmung auf die Zersetzungstemperatur. Das Thermolyseprodukt wird über eine Abzugszone (3) gesammelt, hier gegebenenfalls zur Wärmerückgewinnung mit einem Wärmetauscher in Verbindung gebracht und zur weiteren Aufarbeitung und Reinigung über die Ableitung (4) weitergeleitet.

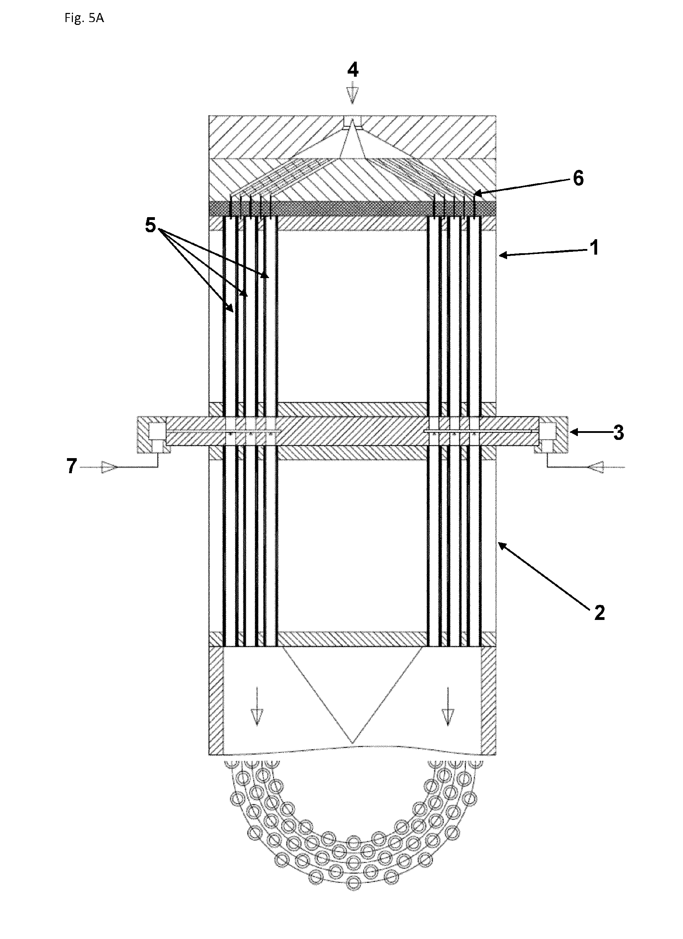

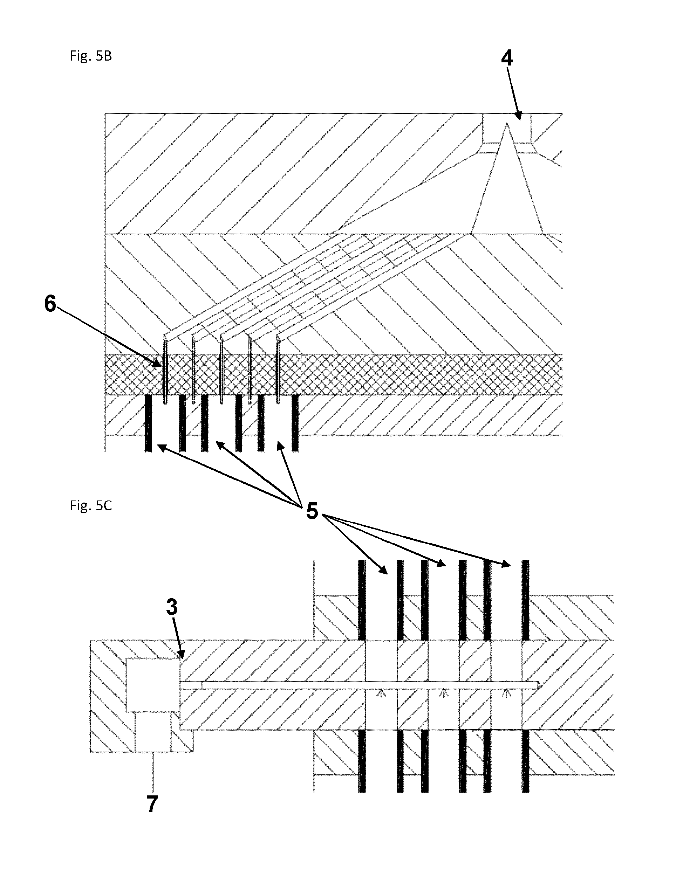

Figur 5 zeigt eine Vorrichtung mit einem Verdampfer (1) und einem Thermolysator (2), welche über einen mittigen Flansch (3, vergrößert in 5C) verbunden sind. Im Flansch wird eine Leitung (7) zur Einblasung eines Gases (z.B. Luft) vorgesehen. In den Verdampfer führt eine Leitung (4, vergrößert in Fig. 5B), die für die einzelnen Rohre (5) des Bündels abzweigen und in Druckreduktionseinheiten in Form von Kapillaren (6) münden. In dieser Ausführungsform der individuellen Einspeisung der Rohre sind die Druckreduktionseinheiten der einzelnen Rohre gleichartig ausgeführt. Im unteren Bereich der Abbildung ist ein Querschnitt des Rohrbündels angegeben.

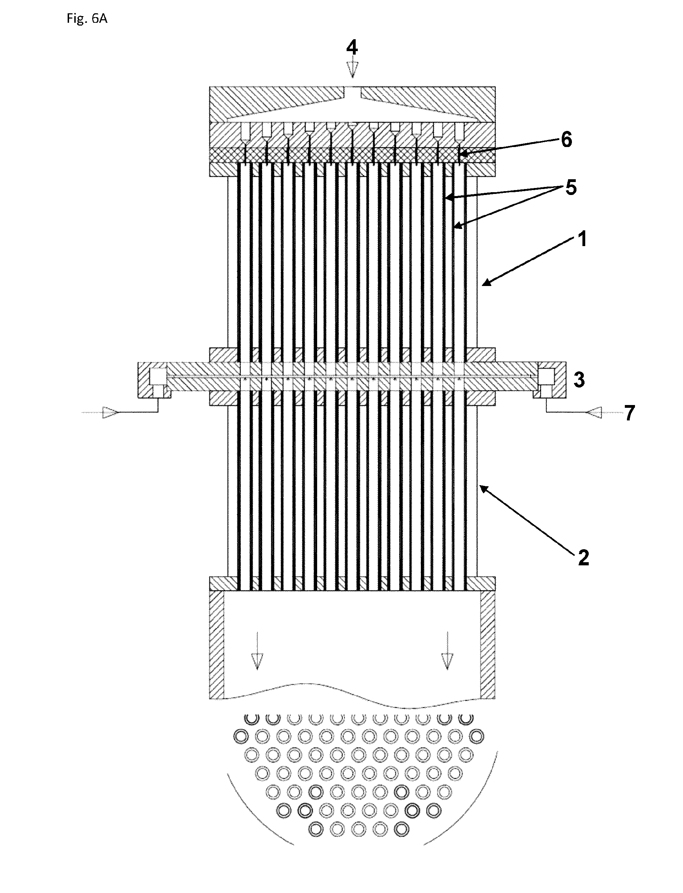

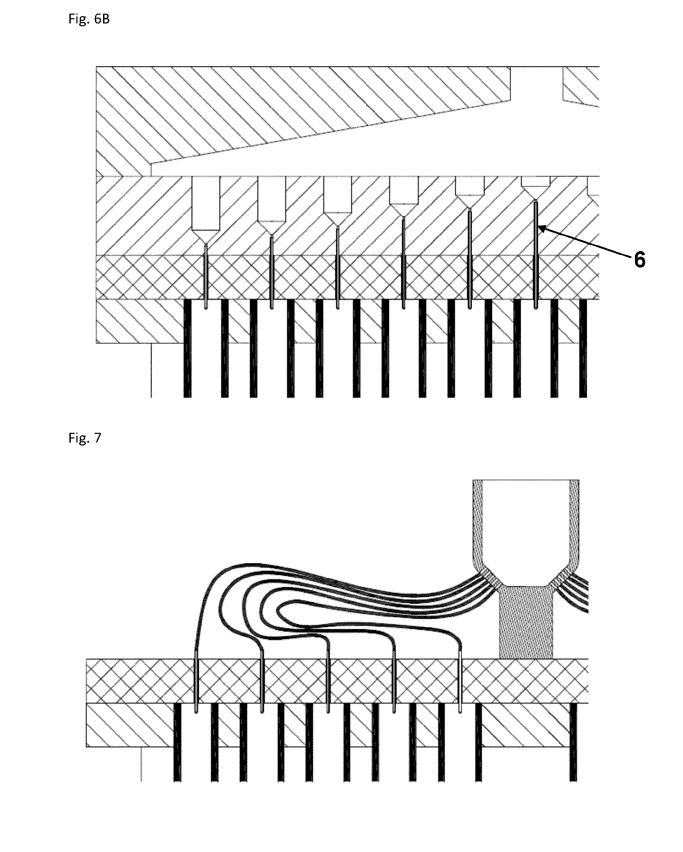

Figur 6 zeigt eine Vorrichtung mit einem Verdampfer (1) und einem Thermolysator (2), welche über einen mittigen Flansch (3) verbunden sind. In den Verdampfer führt eine Leitung (4, vergrößert in Fig. 6B), die in einem Kappenbereich mit einzelnen Druckreduktionseinheiten in Form von Kapillaren (6) in unterschiedlicher Ausführung für die einzelnen Rohre (5) des Bündels mündet. Im unteren Bereich der Abbildung ist ein Querschnitt des Rohrbündels angegeben.
Figur 7 zeigt das Ende einer Zuleitung für den Reaktor mit einzelnen Verbindungsschläuchen für die Einleitung des Ausgangsstoffes über Kapillaren in die Reaktorrohre.

Bevorzugte Ausführungsformen:
Unter Bezug auf Fig. 1, werden die erfindungsgemäß zu verdampfenden Ausgangsstoffe (A und B), von denen zumindest eines thermo- oder pyrolysiert werden soll, in entsprechenden Vorlagebehälter (1 und 2) vorgelegt. Die Vorlagebehälter können mit einer Beheizung oder Kühlung ausgestattet sein und können wenn notwendig mit einem Spülgas überlagert sein. Für sich absetzende Ausgangsstoffe können die Vorlagebehälter auch mit einem Rührwerk oder entsprechenden Umwälzvorrichtungen ausgestattet sein. Die Ausgangsstoffe (A und B) können über eine danach angebrachte Fördereinrichtung gleichzeitig oder nacheinander oder in einem bestimmten Mischungsverhältnis der Fördereinrichtung (3) zugeführt werden. Der Prozess kann durch die Zufuhr einer beliebigen Anzahl von Ausgangsstoffen je nach chemischem Erfordernis erweitert werden.

Als Fördereinrichtung können Zahnradpumpen, Kolbendosierpumpen, Kreiselpumpen, Membranpumpen oder ähnliche eingesetzt werden. Nach der Fördereinrichtung passiert der Fluidstrom vor dem Eintritt in den Verdampfer eine dem Prozessdruck angepasste Druckreduktionseinheit (4) damit im Verdampferteil (5) und im Thermolysatorteil (6) der entsprechende Prozessdruck und der Fluideinstrom eingestellt werden kann. Im Verdampfer werden vorzugsweise Einbauelemente zur Durchmischung, insbesondere ein Sinterelement oder Sieb wird vorzugsweise im Verdampfer in Nähe der Zuführung bzw. der Druckreduktionseinheit platziert, um eine optimale Verteilung im Verdampfer und komplette Verdampfung zu gewährleisten. Ebenfalls kann unmittelbar nach der Einspritzung in den Verdampfer über eine im Verdampferkopfteil eingebracht poröse Platte der Einspeisestrom fein im Verdampferteil verteilt werden. Die Verteilung der Flüssigkeit im Verdampferteil kann auch so ausgestaltet sein, dass im gesamten Verdampferteil bzw. über dessen Länge ein Verteilblech (vorzugsweise porös) eingebaut ist und die Flüssigkeit spiralförmig zur Verdampferinnenwand leitet. Zur effizienteren Verdampfung kann der Wärmeeintrag in die zu verdampfende Flüssigkeit optimiert werden, z.B. durch eine Oberflächenvergrößerung z.B. durch Einbauten, die vorzugsweise ebenfalls induktiv aufgeheizt werden, auch im Inneren über die Einbauten Wärme eingetragen werden kann. Somit kann die Oberfläche bis gegenüber der Leerrohroberfläche um bis das 100-fache vergrößert werden.

Der Einstrom wird über eine Druckreduktionseinheit, insbesondere über eine zuführende Kapillare, gesteuert, z.B. über die Dimension der Kapillare, dass durch den Druckverlust der Druckreduktionseinheit das mit der Unterdruckpumpe aufgebrachte Vakuum im Verdampfer und Thermolysatorteil eingestellt und aufrecht erhalten wird, wobei der Verdampfer kontinuierlich mit Flüssigkeit gespeist wird.

Der Verdampferkörper (5) kann rund, eckig oder in einer besonderen dem Verdampfungsprozess angepassten geometrischen Form ausgeführt sein. Der Verdampferkörper (5) ist zur Erhitzung auf Betriebs- oder Verdampfungstemperatur mit einer Induktionsspule (7) umgeben. Die Induktionsspule (7) kann lose um den Verdampferkörper angebracht sein oder kann zur Abschirmung der Temperatur und zur Sicherheitsvorkehrung in einen feuerfesten Zement eingebettet sein. Die Induktionsspule (7) kann wendelförmig, gabelförmig, stabförmig, zick-zack-förmig ausgebildet sein und den Verdampferkörper ganz oder auch nur teilweise umfassen. Die Induktionsspule (7) ist über Verbindungsstücke oder eine Verbindungsleitung (9) an einen Induktionsgenerator (8) angeschlossen.

Konstruktionen und Auslegung von Induktionsspulen werden von Stanley Zinn und S.L. Semiatin in Heating Treating June 1988 auf den Seiten 32-36; Coil design and fabrication: basic Design and modifications sowie in Heating Treating August 1988 auf den Seiten 29-32; Coil design and fabrication: part 2, speciality coils und in Heating Treating October 1988 auf den Seiten 39-41; Coil design and fabrication: basic Design and modifications part 3, fabrication principles beschrieben. Die Induktionsspulen können zur Isolierung in eine wärmebeständige Zementform oder anderes wärmebeständiges Isoliermaterial eingebettet sein.

Für die induktive Erwärmung des Verdampferteils (5) kann der Verdampfer aus einem elektrisch leitenden Stoff wie Metall oder einem Halbleitermaterial (Silizium) hergestellt sein bzw. diesen zumindest teilweise enthalten. Die Hochfrequenzenergie erzeugt über den Induktionsgenerator (8) wird über einen Induktor (Induktionsspule) (7) auf den Verdampfer übertragen. Der Induktor (7) kann der geometrischen Form der Erwärmungszone angepasst und meist aus einem Kupferhohlprofil gebogen, geformt und zum Eigenschutz vor Erwärmung wassergekühlt sein. Als Induktionsgeneratoren (8) können induktive Mittel- und Hochfrequenzgeneratoren einer Leistung bis 600 kW, und einer Frequenz von 5 kHz bis 2,5 MHz zu Anwendung kommen. Übliche für den Betrieb einzustellende Frequenz sind im Bereich zwischen 5 und 150 kHz. Die Frequenz des Induktionsgenerators wurde mittels Potentiometer vorgewählt bzw. für den Verdampfungs- und Thermolyseprozess vorgewählt und fixiert. Eine speicherprogrammierbare Steuerung kann ebenfalls zur kontinuierlichen Verdampfung und Thermolyse eingesetzt werden. Sollte es der Prozess erlauben kann auch auf eine kapazitive Erwärmung des Reaktorsystems zurückgegriffen werden. Leistungen bis 200 kW bei einer Frequenz von 13 bis 30 MHz können zur Anwendung kommen.

Zum Selbstschutz (Sicherung vor Erwärmung und Schmelze) können die zumeist aus Kupfer/Kupferlegierungen bestehenden Induktionsspulen im Inneren der Induktionsspule mit Kühlwasser gekühlt werden wobei je nach Leistung ein Kühlwasserstrom zwischen 180 1/h und 30 m³/h eingestellt werden und vorzugsweise über das Frequenzsteuergerät geführt werden.

Die im Reaktor induzierte Heizleistung [W] kann über den Strom in der Induktionsspule [Ampere], die relative Permeabilität des Verdampfer- und Thermolyserohrmaterials, dem spezifischen Widerstand des Verdampfer-und Thermolyserohrmaterials [Ωxmm²/m] sowie der eingestellten Frequenz [Hz] eingestellt werden. Mit typischen spezifischen Widerständen von Aluminium 2,65 · 10⁻²; Edelstähle 7,2 · 10⁻¹; Eisen 1,0 · 10⁻¹ bis 1,5 · 10⁻¹; Edelmetalle 2,214 · 10⁻² kann gerechnet werden.

Zur Berechnung der Heizleistung weisen folgende Werkstoffe eine relative Permeabilität [µr] Kupfer 1 - 6,4 · 10⁻⁶; Aluminium 1 + 2,2 · 10⁻⁵; Platin 1 + 2,57 · 10⁻⁴; Eisen 300...10 . 000 ; Ferrite 4...15.000; NiFe 50.000...140.000 auf.

Die Konstruktion der Verdampfer- und Thermolyserohre sowie deren Abmessungen und Rohrmasse kann so gewählt werden, dass der über die Verdampfer- und Thermolyserohre einzutragende Energieaufwand bzw. Leistung für die Steuerung des Verdampfungs- und Spaltprozesses in kurzer Zeit erfolgen kann. Der Verdampfungs-und Thermolyseprozess kann je nach Durchsatzerfordernis und eingesetzter Rohrmasse mit einem spezifischen Energieaufwand zwischen 12 Watt.s und 60.000 Watt.s, vorzugsweise zwischen 5.000 Watt.s und 30.000 Watt.s betrieben werden, sodass je nach erforderlicher Verdampfungsleistung und Spaltleistung errechenbar aus den Stoffdaten eine relativ kurze Erwärmung des Verdampfungs-und Thermolysesystems resultiert. Der eingestellte Prozessdruck im Inneren der Reaktoren bewegt sich üblicherweise zwischen 50 und 200 mbar und kann mit einer Unterdruckpumpe und/oder einem Steuerventil eingestellt bzw. konstant gehalten werden.

Die Wärme entsteht im Verdampferteil (5) bzw. im folgenden Thermolysator (6) in den Reaktorrohren selbst und es wird kein Wärmeübertragungsmedium benötigt (z.B. Luft oder andere leitende feste Verbindungen). Die elektrische Energie wird dem aufzuheizenden Reaktor im erfindungsgemäßen Falle der Verdampferkörper (5) oder Thermolysekörper (6) durch ein Magnetfeld übertragen.

Der durch die Induktionsspule/Induktor (7) fließende Wechselstrom erzeugt ein magnetisches Wechselfeld, das im Werkstück einen bestimmten Strom zu Folge hat. Die über die Induktionsspule (7) zugeführte elektrische Energie wird also vorerst in magnetische Energie und diese alsdann im Werkstück in Wärme umgewandelt. Die Stromdichte im Werkstück ist durch sogenannten "Skineffekt" bestimmt. Dabei wird die größte Stromdichte an der Verdampfer- oder Thermolysatoroberfläche erreicht. Nach Innen fällt die Stromdichte erfahrungsgemäß exponentiell ab. Im Inneren des induzierten Materials fließt praktisch kein Strom mehr. Je höher die am Induktor (7) angelegte Frequenz der Spannung ist, desto geringer ist die Eindringtiefe der Wirbelströme im den Verdampfungs- und Thermolyseapparat (Skineffekt).

In den Verdampfer- und Thermolysekörper können auch speziell geformte Einbauelemente zur Oberflächenvergrößerung eingelagert werden. Diese speziellen Einbauelemente können über die gesamte Verdampfer- und Thermolysekörperlänge als "Einstabkörper" eingebracht werden, oder in einzelnen Formkörpersegmenten, wobei die Segmente zueinander radial versetzt sein können damit ein Umlenken während der Verdampfung des Flüssigkeitsstromes bzw. während der Thermolyse der Dampf und das Spaltgas umgelenkt und mit der Heizfläche in Kontakt gebracht werden können. Die Kontaktfläche kann gleichzeitig als Katalysatorkontaktfläche ausgebildet sein. Vorzugsweise werden die Einbauelemente induktiv beheizt.

Um einen wirtschaftlichen Thermolyseprozess gestalten zu können wurde ein Rohrbündelapparat in einem Induktionsfeld erwärmt. Bedingt durch die Rohrbündelgeometrie befinden sich Hohlräume und Leerfelder zwischen den einzelnen Rohren, sodass mit einer stark reduzierten Induktionserwärmung gerechnet werden musste. Überraschenderweise hat sich herausgestellt, dass gemäß Fig. 2 Rohrbündel als Verdampfer- und Pyrolysator/Thermolysator konfiguriert werden können die sich im Induktionsfeld sehr gut erwärmen lassen, wobei der Rohrabstand zwischen den einzelnen Prozessverdampfern und Thermolysatorrohren konstruktiv so gewählt wurde, dass ein Mindestabstand von 2 mm vorzugsweise 5 mm gegeben war. Vorzugsweise wurden dünnwandige Rohre für den Verdampferkörper (7) und den Thermolysator (6) eingesetzt. Die Rohrwand ist beispielsweise zwischen 0,1 mm und 2 cm, vorzugsweise zwischen 1 mm und 1 cm. Ebenfalls möglich ist ein Verdampferreaktorabschnitt und/oder ein Thermolysereaktorabschnitt mit jeweils bis zu 500 Einzelrohren. Die Rohranzahl zwischen Verdampferkörper und Thermolysekörper kann aber auch unterschiedlich gewählt werden.

Die Verdampfer- und Thermolysatorrohre können gemäß einer vorgegebenen Teilung zu einem Bündel zusammengebaut und an den jeweiligen Rohrbündelenden mit der Kopf/Endplatte verschweißt oder eingepresst werden. Zwischen der Kopf/Endplatte können mehrere Zwischenplatten eingebaut sein. Dies hat sich vorteilhaft erwiesen, da, bedingt durch die induktive Erwärmung, in den Plattenbereichen Temperaturzonen mit gegenüber der Rohrbündeltemperatur unterschiedlichen Temperaturzonen eingestellt werden können, damit kann bewusst auf die Reaktionsführung bzw. Temperaturführung Einfluss genommen werden. Die Kopf/Endplatten bzw. die Zwischenplatten können als Rundlochung versetzt, als Rundlochung geradreihig, als Quadratlochung geradreihig, als Quadratlochung versetzt, als Quadratlochung diagonal, als Hexagonallochung versetzt oder aber als Langlochung versetzt und Langlochung geradreihig querlaufend sowie Langlochung geradreihig eckig querlaufend ausgeführt sein.

Der Verdampferteil (5) ist mit dem Thermolysatorteil (6) formschlüssig und dicht verbunden. Als Verbindungselement können Schrauben, Flansche oder auch Pressmuffen verwendet werden. Ein Zusammenfügen mit thermisch beständiger, verarbeitbarer Keramik (Keramikklebstoffe-Durabond®) ist ebenfalls möglich. Die Abdichtung zwischen Thermolysator (6) und Verdampferkörper (7) kann über metallische Dichtungen oder über keramische Dichtungen oder über Gewindedichtungen selbst erfolgen.

Der Thermolysekörper (6) kann rund, eckig oder in einer besonderen dem Thermolyseprozess angepassten geometrischen Form ausgeführt sein. Der Thermolysekörper (6) ist zur Erhitzung und Spaltung des flüssigen oder dampfförmig eingespeisten Ausgangsstoffes auf Betriebs- oder Spalttemperatur mit einer Induktionsspule (10) umgeben. Die Induktionsspule (10) kann lose um den Thermolysekörper angebracht sein oder kann zur Abschirmung der Temperatur und zur Sicherheitsvorkehrung in einen feuerfesten Zement eingebettet sein. Die Induktionsspule (10) kann wendelförmig, gabelförmig, stabförmig, zick-zack-förmig ausgebildet sein und den Thermolysekörper ganz oder auch nur teilweise umfassen. Die Induktionsspule (10) ist über Verbindungsstücke oder einer Verbindungsleitung (11) an einen Induktionsgenerator (8) angeschlossen. Am Austritt aus dem Thermolysekörper (6) ist ein Prozesskondensatableitsystem (12) angebracht um eventuell anfallendes Kondensat (13) während dem Start der Thermolyse gezielt auffangen zu können.

Da Thermolyseprozesse bei sehr hohen Temperaturen ablaufen und im Falle der Wiederverwendung des Spaltgases die nachgeschalteten Apparaturen und Prozessanlagenteile bei niedrigeren Temperaturen betrieben werden können, kann das Spaltgas über einen Spaltgaskanal (15) (beheizt oder unbeheizt) und/oder einem Wärmetauscher zur Abkühlung- und/oder Wärmerückgewinnung zugeführt werden.

Formkörper, Rohre und Einlagerungen, oder Einbauten können hergestellt aus Katalysatormaterial wie α-Eisen/Al₂O₃; Eisenlegierungen, Katalysatormaterial aus CuO/Cr₂O₃, ZnO/Cr₂O₃ oder CuO/ZnO, V₂O₅/Träger sowie Katalysatoren aus Platin/Rhodium sein und für die Verdampfung und Thermolyse eingesetzt sein.

Ein Vorteil des induktiv betriebenen Verdampfungs- und Thermolysprozesses besteht darin, dass, sollten sich im Zuge des Betriebs der Anlage im Inneren Ablagerungen oder Verklumpungen bilden, diese durch Erhitzung abgetragen werden können. Eine Spülung mit Flüssigkeiten kann dadurch entfallen und verhindert, dass gefährliche Prozess-Chemikalien anfallen. Die gute Temperatursteuerbarkeit sowie das gute An- und Abfahrverhalten des erfindungsgemäßen Reaktors erlaubt es, dass gefährliche Stoffe wie z.B. die Herstellung von Blausäure aus Formamid vor Ort bzw. am Ort der Benützung "on-demand" hergestellt werden können und müssen nicht einem Gefahrstofftransport und dessen Auflagen unterworfen werden.

Die Zuführung von Prozessflüssigkeit und oder Prozessgas (Frischgas oder recyceltes Gas) kann gemäß Fig. 1 an Stelle (32) erfolgen, wobei die Einspeisung so ausgeführt sein kann wie in Fig. 5 oder 6 im Verbindungsabschnitt zwischen Verdampfer und Thermolysator beschrieben.

Beispiele:
Die Versuche wurden mit einem Reaktorsystem durchgeführt wie oben beschrieben (Beispielsbeschreibung gemäß Figur 1)

Das Reaktorsystem war aus 120 Rohren für den Verdampfungsteil und ebenso vielen Rohren für den Thermolyseteil zusammengesetzt. Für die verwendeten rohrförmigen Verdampfer- und Thermolysebauteile wurden ST35 Präzisionsrohrbauteile nach DIN 2391 eingesetzt. Der Innendurchmesser variierte zwischen 0,5 und 13 mm wobei die eingesetzten Rohrwandstärken sich zwischen 0,1 und 1,5 mm bewegten. Der Thermolyesteil wurde unmittelbar mit dem Verdampferteil verbunden.

Die Verdampfer- und Thermolysatorrohre wurden gemäß einer vorgegebenen Teilung zu einem Bündel zusammengebaut und an den jeweiligen Rohrbündelenden mit der Kopf/Endplatte verschweißt oder eingepresst. Zwischen der Kopf/Endplatte sind mehrere Zwischenplatten eingebaut.

Beide Reaktorabschnitte wurden zur induktiven Beheizung in eine speziell dem Verdampferkörper und dem Thermolysekörper angepasste Induktionsspule eingepasst.

Die Induktionsspule wurde an einen Generator mit einer Leistung von 15-20 kW angeschlossen. Für die Induktionserwärmung wurden Frequenzen im Bereich zwischen 5 und 150 kHz verwendet. Zum Selbstschutz (Sicherung vor Erwärmung und Schmelze) wurden die aus Kupfer/Kupferlegierungen bestehenden Induktionsspulen im Inneren der Induktionsspule mit Kühlwasser gekühlt. Die Steuerung der Induktionsspule und damit der zugeführten Energie sowie die Einhaltung der präzisen Prozesstemperatur (+/- 1°C) wurde mit einem Pyrometer durchgeführt.

Die Konstruktion der Verdampfer- und Thermolyserohre sowie deren Abmessungen und Rohrmasse wurden so gewählt, dass der über die Verdampfer- und Thermolyserohre einzutragende Energieaufwand bzw. Leistung für die Steuerung des Verdampfungs- und Spaltprozesses in kurzer Zeit erfolgen kann.

Der im Versuch eingestellte Prozessdruck bewegte sich zwischen 50 und 200 mbar und wurde mit der Unterdruckpumpe und einem Ventil eingestellt bzw. konstant gehalten.

**Tabelle: Aufheizversuch mit Wasser, Induktionsleistunq 10 kW:**

| **Versuch** | **Durchsatz pro Rohr (kg/h)** | **Temperatur am Einlauf, °C** | **Dampfphase zwischen Verdampfer und Thermolysator, °C** | **Spaltgas temperatur, °C** | **Induktor-temperatur außen, °C** | **Volumens-belastung, kg/m³ sec** | **Obeflä flächen-belastung, kg/m² s ec** |
|---|---|---|---|---|---|---|---|
| 1 | 1,16 | 26 | 210 | 495 | 123 | 33 | 8 |
| 2 | 0,92 | 28 | 205 | 505 | 118 | 27 | 7 |
| 3 | 0,72 | 29 | 189 | 510 | 125 | | |
| 4 | 0,68 | 32 | 193 | 512 | 130 | 20 | 5 |
| 5 | 0,63 | 26 | 125 | 508 | 132 | | |
| 6 | 0,52 | 27 | 180 | 515 | 127 | | |
| 7 | 0,51 | 25 | 197 | 480 | 115 | | |
| 8 | 0,49 | 27 | 205 | 535 | 129 | 14 | 4 |
| 9 | 0,1 | 24 | 198 | 520 | 117 | 3 | 1 |
| 10 | 0,1 | 23 | 189 | 535 | 123 | 118 | 35 |
| 11 | 0,1 | 28 | 197 | 555 | 118 | 472 | 141 |

Für Versuche 1 bis 9 wurden Rohre mit einem Durchmesser von 7 mm und einer Länge von 25 cm verwendet, für Versuch 10 Rohre mit einem Durchmesser von 1 mm und einer Länge von 30 cm, für Versuch 11 Rohre mit einem Durchmesser von 0,5 mm und einer Länge von 30 cm. Hieraus ergeben sich bei unterschiedlichem Einstrom unterschiedliche Oberflächen- und Volumensbelastungen im Reaktor. In allen Fällen konnte die für die katalytische Pyrolyse von für bei ~500 °C sich zersetzenden Ausgangsstoffen, wie Carbonsäureamide, insbesondere von Formamid, notwendige Temperatur (Spaltgastemperatur) erreicht werden.

## Patentansprüche

1. Verfahren zur Pyrolyse oder Thermolyse eines fluiden oder fluidisierten Ausgangsstoffes in einem Rohrbündelreaktor bestehend aus einer Vielzahl an beheizbaren Reaktorrohren, wobei der Ausgangsstoff durch zumindest eine Zuleitung dem Rohrbündelreaktor an einem Ende zugeführt wird, wobei die Zuleitung über mehrere Druckreduktionseinheiten verfügt, welche einen Überdruck vor der Einleitung des Ausgangsstoffes in einzelne Reaktorrohre des Rohrbündelreaktors und einen Unterdruck im Inneren der Reaktorrohre ermöglicht, wobei die Druckreduktionseinheiten einen im Wesentlichen gleichen Einstrom des Ausgangsstoffes in einzelne Reaktorrohre steuern, und die Reaktorrohre in zumindest einem primären Abschnitt auf eine Zersetzungstemperatur des Ausgangsstoffes erhitzt wird, wodurch der Ausgangsstoff pyrolysiert oder thermolysiert wird und ein Pyrolyse- oder Thermolyse-Produkt erhalten wird.

2. Verfahren nach Anspruch 1, **dadurch gekennzeichnet, dass** die innere Oberfläche der Reaktorrohre im primären Abschnitt induktiv beheizt wird.

3. Verfahren nach Anspruch 1 oder 2, **dadurch gekennzeichnet, dass** der Ausgangsstoff bei einer Temperatur unter der Zersetzungstemperatur vorerwärmt und verdampft wird.

4. Verfahren nach Anspruch 3, **dadurch gekennzeichnet, dass** der Ausgangsstoff in einem sekundären Abschnitt der Reaktorrohre, verdampft wird, wobei vom sekundären Abschnitt der verdampfte Ausgangsstoff in den primären Abschnitt zugeführt wird.

5. Verfahren nach einem der Ansprüche 1 bis 4, wobei die Zersetzung im primären Abschnitt, vorzugsweise auch die Vorerwärmung und Verdampfung, die Überführung des Ausgangsstoffes zum primären Abschnitt, kontinuierlich betrieben werden.

6. Verfahren nach einem der Ansprüche 1 bis 5, **dadurch gekennzeichnet, dass** feste Ablagerungen, welche durch die Pyrolyse oder Thermolyse gegebenenfalls als Nebenprodukte entstehen, durch erhöhte Temperatur der inneren Oberfläche des primären Abschnitts, insbesondere zur Verdampfung, Zersetzung oder zum Abbrennen der Ablagerungen, entfernt werden.

7. Verfahren nach einem der Ansprüche 1 bis 6, **dadurch gekennzeichnet, dass** die innere beheizte Oberfläche den im Wesentlichen gesamten Innenraum eines Pyrolyse- oder Thermolysereaktors begrenzt.

8. Verfahren nach einem der Ansprüche 1 bis 7, **dadurch gekennzeichnet, dass** die Pyrolyse oder Thermolyse des Ausgangsstoffes bei Unterdruck, vorzugsweise bei einem absoluten Druck von bis zu 500 hPa, insbesondere bevorzugt von bis zu 250 hPa, im Speziellen bevorzugt im Bereich von 80 hPa bis 200 hPa, erfolgt.

9. Verfahren nach einem der Ansprüche 1 bis 8, **dadurch gekennzeichnet, dass** die innere Oberfläche der Reaktorrohre zumindest im primären Abschnitt, die Oberfläche eines Eisenkörpers ist und/oder die Oberfläche Eisen oder Eisenoxid ist.

10. Verfahren nach einem der Ansprüche 1 bis 9, **dadurch gekennzeichnet, dass** die innere Oberfläche der Reaktorrohre im primären Abschnitt auf eine Temperatur unter der Zersetzungstemperatur beheizt wird, vorzugsweise mindestens 20°C, insbesondere bevorzugt mindestens 50°C, unter der Zersetzungstemperatur und/oder auf eine Temperatur bei der keine festen Nebenprodukte der Verdampfung des Ausgangsstoffes entstehen, insbesondere keine Polymerisationsprodukte entstehen.

11. Verfahren nach einem der Ansprüche 1 bis 10, **dadurch gekennzeichnet, dass** der Druckwiderstand der Druckreduktionseinheiten mindestens 800 hPa beträgt, vorzugsweise wobei der Druckwiderstand bei Atmosphärendruck im Inneren der Reaktorrohre den Einfluss von Ausgangsmaterial unterbindet.

12. Verfahren nach einem der Ansprüche 1 bis 11, **dadurch gekennzeichnet, dass** der Unterdruck im Inneren der Reaktorrohre derart gewählt wird, sodass der Einstrom von Fluid in den Reaktor zwischen 1x10⁻⁵ m³/h und 1 m³/h beträgt, und/oder zwischen 0 und 1x10⁻⁶ m³/h bei Nichtbetrieb beträgt.

13. Vorrichtung zur Durchführung eines Verfahrens nach einem der Ansprüche 1 bis 12, mit einem Pyrolyse- oder Thermolysereaktor mit einem Reaktorbündel, einer Vielzahl an Reaktorrohren, mit einer Ausgangsstoffzuleitung, welche mit den einzelnen Reaktorrohren über eine Druckreduktionseinheit verbunden ist, wobei die Reaktorrohre beheizbar sind, und wobei das Innere der Reaktionsrohre mit einer Unterdruckpumpe operativ verbunden ist, wobei die Druckreduktionseinheiten einen im Wesentlichen gleichen Einstrom des Ausgangsstoffes in einzelne Reaktorrohre steuern.

14. Vorrichtung nach Anspruch 13, wobei die Druckreduktionseinheiten Druckregler oder Kapillaren mit einem vorbestimmten Druckwiderstand sind.

15. Vorrichtung nach Anspruch 13 oder 14, **dadurch gekennzeichnet, dass** der Reaktor zur kontinuierlichen Einführung von Ausgangsstoff bzw. Abführung von Pyrolyse oder Thermolyse-Produkt geeignet ist.

16. Vorrichtung nach Anspruch 13 bis 15, **dadurch gekennzeichnet, dass** die Reaktorrohre induktiv beheizt sind, und vorzugsweise die Oberfläche der Reaktorrohre induktiv auf mindestens 1000°C, insbesondere bevorzugt mindestens 1300°C, beheizbar sind, insbesondere bevorzugt wobei die Reaktorrohre Eisenkörper und oder eine eisenhaltige Oberfläche aufweisen.

17. Vorrichtung nach einem der Ansprüche 13 bis 16, mit einem beheizbaren Verdampfer, vorzugsweise wobei eine Gasleitung vom Verdampfer in den Reaktor führt, vorzugsweise wobei der Verdampfer ein Abschnitt im Rohrbündelreaktor ist.

18. Verfahren zur Thermolyse eines Carbonsäureamids, vorzugsweise von Formamid zur Bildung von HCN, in einem Rohrbündelreaktor mit einer Vielzahl an Reaktorrohren **dadurch gekennzeichnet, dass** in einer ersten Reihe an Verfahrensschritten Carbonsäureamid mit beheizten Oberflächen des Reaktors in Kontakt gebracht wird, wobei die Vielzahl an Reaktorrohren des Rohrbündelreaktors mit gleichen Mengen Carbonsäureamid durch Druckregulation beschickt werden, wobei an den beheizten Oberflächen Carbonsäureamid auf seine Zersetzungstemperatur erhitzt wird und kontinuierlich Produktgas-Gas abgeführt wird.

19. Verfahren nach Anspruch 18, wobei in einer zweiten Reihe an Verfahrensschritten, ohne Carbonsäureamid-Einleitung in den Reaktor die Temperatur über die Zersetzungstemperatur erhöht wird um gegebenenfalls gebildete feste Ablagerung von Nebenprodukten der Thermolyse durch Verdampfung, Zersetzung oder Abbrennen zu entfernen.

20. Verfahren nach Anspruch 19, **dadurch gekennzeichnet, dass** die Oberfläche zur Thermolyse auf 430°C bis 600°C, vorzugsweise induktiv, erhitzt wird.

21. Verfahren nach Anspruch 19 oder 20, **dadurch gekennzeichnet, dass** die Oberfläche zur Entfernung der Nebenprodukte auf 700°C bis 1500°C, vorzugsweise induktiv, erhitzt wird.
